Europäisches Patentamt

**European Patent Office**

Office européen des brevets

(19)

(11) Publication number: **0 001 350**
**B1**

(12) **EUROPEAN PATENT SPECIFICATION**

(45) Date of publication of patent specification: **12.05.82**

(51) Int. Cl.³: **F 16 K 17/08, B 63 C 9/04**

(21) Application number: **78300399.9**

(22) Date of filing: **19.09.78**

(54) **Relief valve.**

(30) Priority: **19.09.77 US 834084**

(43) Date of publication of application:
**04.04.79 Bulletin 79/7**

(45) Publication of the grant of the patent:
**12.05.82 Bulletin 82/19**

(84) Designated Contracting States:
**DE FR GB NL**

(56) References cited:
**FR - A - 2 010 342**
**GB - A - 706 112**
**GB - A - 1 130 006**
**GB - A - 1 165 710**
**US - A - 2 594 626**
**US - A - 3 074 425**
**US - A - 3 189 040**

(73) Proprietor: **THE B. F. GOODRICH COMPANY**
**277 Park Avenue**
**New York New York (US)**

(72) Inventor: **Autry, Steven Richard**
**4085 Isle Circle, N.W.**
**Massillon Ohio 44646 (US)**

(74) Representative: **Mayes, Stuart David et al,**
**BOULT, WADE & TENNANT 27 Furnival Street**
**London, EC4A 1PQ (GB)**

Courier Press, Leamington Spa, England.

Relief valve

The invention relates to high pressure relief valves of the kind comprising a high pressure relief valve comprising a cylindrical housing with a reduced diameter cylindrical end portion, said end portion being externally threaded, an annular flange threadedly connected to said end portion for attachment to an inflatable raft and for communication with a chamber therein, a stepped bore extending through said housing, said bore having a first upper bore portion and a second lower bore portion, said second bore portion being of smaller diameter than said first bore portion and located in said cylindrical end portion an annular shoulder formed between said first and second bore portions defining an annular valve seat, and a piston slidably received by said first bore portion.

Such valves are known from British Patent Specification No. 1130006, British Patent Specification No. 706112 and US Patent Specification No. 2594626.

British Patent Specification No. 1130006 describes a valve in which access of fluid to the outlet ports is throttled, particularly in initial cracking of the pressure relief valve, as well as in subsequent movement of the closure member since the flow of fluid must curve over and around the annular clearance space of the closure member. The shape of the closure member acts as a shroud to deter snap action, which snap action is an aim of the applicant's claimed valve.

British Patent No. 706112 shows a valve which has an exit bore for the discharge of fluid located remotely from the second bore portion, and this valve has a piston with external fluting to allow fluid to pass to the exit bore.

US Patent Specification No. 2594626 discloses a valve having a piston formed with an annular groove to provide an upper flange and a lower flange. The lower flange has vents through it, and gas to be vented passes through the vents in the lower flange to an outlet post in the valve housing. In the valve of Specification No. 2594676 the outlet port is open when the piston is seated, restricted during initial travel of the piston from its seat and reopened when the piston moves further from the seat. There is therefore delay in full venting while the piston is raised to clear the outlet port.

It is the object of this invention to provide a valve which relieves pressure quickly and efficiently, and which closes quickly when pressure has been relieved, and which overcomes disadvantages associated with the prior art.

According to the invention there is provided a high pressure relief valve comprising a cylindrical housing with a reduced diameter cylindrical end portion, said end portion being externally threaded, an annular flange threadedly connected to said end portion for attachment to an inflatable raft and for communication with a chamber therein, a stepped bore extending through said housing, said bore having a first upper bore portion and a second lower bore portion, said second bore portion being of smaller diameter than said first bore portion and located in said cylindrical end portion, an annular shoulder formed between said first and second bore portions defining an annular valve seat, a piston slidably received by said first bore portion, characterized in that said piston has an outer wall length that is greater than one-half of the depth of the first bore portion, said piston is cup-shaped the lowermost portion of said piston being provided with an O-ring for engaging said valve seat said O-ring exposing only a portion of said annular valve seat to pressurised medium from said second bore portion, spring means extending into said cup-shaped piston and guided by and seated therein, said spring means biasing said piston into engagement with said valve seat, said cylindrical housing having a plurality of circumferentially spaced and evenly spaced passageways communicating the exterior of said cylindrical housing with the interior of said first bore portion, said passageways being located closely adjacent to said valve saet such that as soon as said O-ring is lifted from said annular valve seat, venting takes place directly through the passageways, an annular washer located in said first bore portion for engaging said spring means for retaining said piston in said first bore portion, an annular bore being provided for venting gases to atmosphere, and wherein the total area of said passageways is less than the area of said second portion which communicates with the bottom of said piston to initiate the venting of said relief valve.

By way of example, one embodiment of a high pressure relief valve according to the invention will now be described with reference to the accompanying drawings, in which:

Figure 1 is an enlarged axial cross-sectional view of a valve assembly constructed in accordance with the teachings of the invention;

Figure 2 is an enlarged fragmentary cross-sectional view taken on line 2—2 of Figure 1.

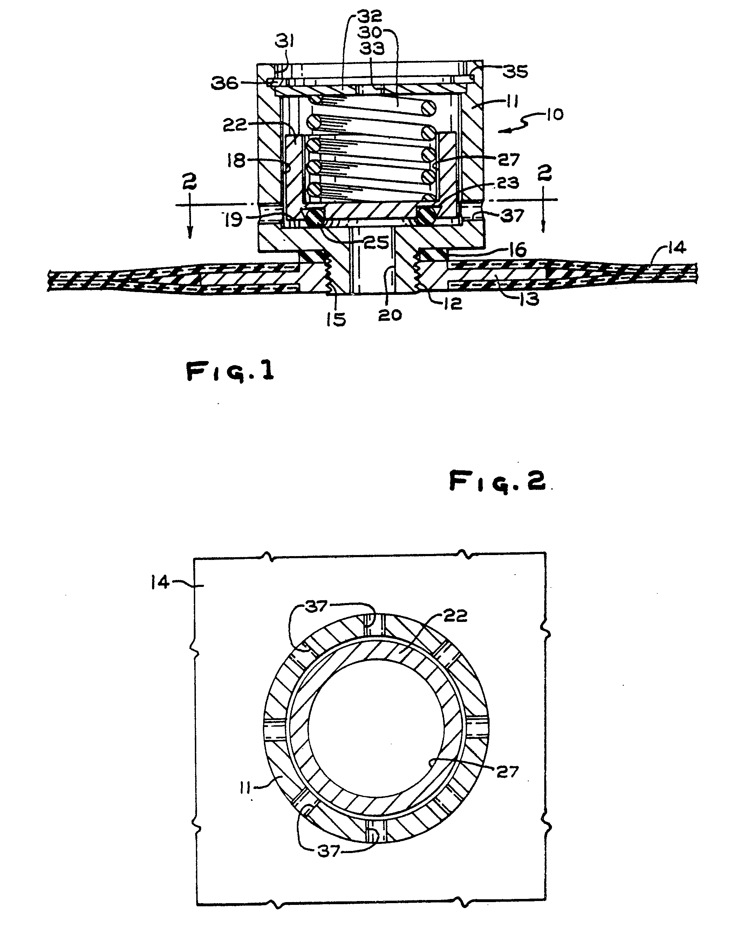

Referring to the drawings wherein like reference characters designate like or corresponding parts throughout the several views there is shown in Figure 1 a valve assembly comprising a stepped cylindrical valve housing 10 having an upper cylindrical portion 11 and a lower threaded portion 12 which threaded portion 12 is secured to a flange 13. Flange 13 is suitably bonded to a rubberized material 14 that is part of an inflatable life support raft.

Flange 13 has a centrally disposed threaded bore 15 that receives the lower threaded portion 12 of valve housing 10 to compress gasket 16 that is located on the shoulder between the lowermost end portion of cylindrical housing 11 and the threaded portion 12.

Cylindrical housing 11 has a central bore 18 extending therein forming a lower annular seat or wall 19. Bore 18 communicates with a bore 20 that extends through the lower threaded portion 12. The diameter of bore 20 is substantially smaller than the diameter of bore 18. A cup-shaped piston 22 is slidably received within bore 18 of cylindrical housing 11. Although in the drawings a gap is shown between the piston 22 and bore 18 for the sake of clarity, in practice the piston 22 is a snug fit in the bore 18. The lower bottom end portion of piston 22 has an annular recess 23 along its outer periphery to receive an annular O-ring or sealing ring 25 which is adapted to seat on the annular seat 19. The annular recess 23 is dove-tailed in cross-section to prevent blowing off of the O-ring at high fluid flow rates through the valve. As shown in Figure 1, the dove-tail is angled on one wall only, the other wall being perpendicular to the piston base surface. The angled wall is the wall against which escaping fluid forces the O-ring. The mean diameter of annular ring 25 determines the pressure area which is acted upon by the pressure within the raft chamber acting through bore 20. The area of the bottom surface of the piston 22 is the effective pressure area which maintains the piston 22 open. In this embodiment, the diameter of the O-ring is approximately the mean of the diameters of the bore 18 and the bore 20. The piston 22 is centrally recessed as at 27 to provide a seat for one end of a compression coil spring 30. The upper inner peripheral edge portion of cylindrical housing 11 is recessed as at 31 to receive an annular cap 32 which cap 32 engages the other end of compression spring 30. Cap 32 has a central bore 33. The recessed portion 31 is further grooved as at 35 to receive a retaining ring 36 which frictionally engages annular cap 32 and holds such cap in position thereon. The lower portion of cylindrical valve housing 10 has a plurality of circumferentially spaced bores 37 interconnecting the central bore 18 with atmosphere to provide an exhaust for fluid escaping from the vessel to which the valve is attached.

In the operation of the pressure relief valve described, assume the raft to which the valve is connected is pressurized to a pressure less than the pressure which actuates the pressure relief valve (assuming a pressure of 2.76 N/cm² (4.0 psig) for such actuation). Where the pressure rises above this pressure rapidly, then the piston 22 is moved upwardly compressing spring 30 and unseating O-ring 25 away from annular seat 19. The effective area for maintaining the piston valve 22 open is the area of the piston (effective pressure area), whereas the effective area to initially open the valve is determined by the mean diameter of O-ring 25 (pressure gauging area). The flow area through which fluid is exhausted is the sum total of the area of all the bores 37. This effective flow area is smaller than the flow area of bore 20, thereby providing for a transfer of the pressure drop from the exit of bore 20, as in conventional relief valves, to the exit of bores 37. This causes a pressure build-up in bore 18 below piston 22, thereby increasing the movement of piston 22 and thus providing an increased effective flow area and resulting in a rapid dumping of air pressure from the raft. This action of the valve compared to a conventional valve is significantly faster in relieving the pressure. Additionally, the sum total of the areas of the bores 37 and the bore 33 is less than the flow area of the bore 20.

The improvement in dumping action and the snap-action of the valve is significant over known pressure relief valves. Upon relieving of the pressure, the valve piston 22 is snapped into place by the spring 30.

## Claims

1. A high pressure relief valve comprising a cylindrical housing (10) with a reduced cylindrical end portion (12), said end portion (12) being externally threaded, an annular flange (13) threadedly connected to said end portion (12) for attachment to an inflatable raft (14) and for communication with a chamber therein, a stepped bore extending through said housing (10), said bore having a first upper bore portion (18) and a second lower bore portion (20), said second bore portion (20) being of smaller diameter than said first bore portion (18) and located in said cylindrical end portion (12), an annular shoulder formed between said first (18) and second bore portions (20) defining an annular valve seat (19), a piston (22) slidably received by said first bore portion (18), characterized in that said piston (22) has an outer wall length that is greater than one-half of the depth of the first bore portion (18), said piston (22) is cup-shaped, the lowermost portion of said piston (22) being provided with an O-ring (25) for engaging said valve seat (19) said O-ring exposing only a portion of said annular valve seat (19) to pressurized medium from said second bore portion, spring means (30) extending into said cup-shaped piston (22) and guided by and seated therein, said spring means (30) biasing said piston (22) into engagement with said valve seat (19), said cylindrical housing (10) having a plurality of circumferentially spaced and evenly spaced passageways (37) communicating the exterior of said cylindrical housing (10) with the interior of said first bore portion (18), said passageways (37) being located closely adjacent to said valve seat (19) such that as soon as said O-ring (25) is lifted from said annular valve seat (19), venting takes place directly through the passageways (37), an annular washer (32) located in said first bore portion (18) for engaging said spring means (30) for retaining said piston (22) in said first bore portion (18), an annular bore (33) being provided for venting gases to atmosphere, and wherein the total area of said passageways is less than the area of said second portion (20) which communicates with the bottom of said piston (22) to initiate the venting of said relief valve.

2. A high pressure relief valve as claimed in claim 1 characterized in that an annular recess (23) is provided in the lower surface of the piston (22), the O-ring (25) being engaged in the recess (23) to provide the seal between the piston (22) and the valve seat (19).

3. A high pressure relief valve as claimed in claim 2 characterized in that the annular recess (23) is dove-tailed in cross-section, the dove-tail being angled inwardly on the radially outward side.

4. A life raft comprising a high pressure relief valve as claimed in any preceding claim.

## Revendications

1. Soupape de décharge à haute pression, comprenant un corps cylindrique (10) ayant une partie d'extrémité cylindrique réduite (12) ladite partie d'extrémité (12) étant filetée extérieurement, une collerette annulaire (13) reliée par vissage à ladite partie extrème (12) par fixation sur un radeau gonflable (14) et communication avec une chambre ménagée dans celui-ci, un alésage étagé s'étendant au travers dudit corps (10), ledit alésage comportant une première partie supérieure (18) et une seconde partie inférieure (20), ladite seconde partie (20) ayant un diamètre plus petit que la première partie (18) et étant placée dans ladite partie d'extrémité cylindrique (12), un épaulement annulaire formé entre lesdites première et seconde parties d'alésage (20) et définissant un siège annulaire de soupape (19), un piston (22) reçu à coulissement par ladite première partie d'alésage (18), caractérisée en ce que ledit piston (22) à une longueur de paroi extérieure qui est supérieure à la moitié de la profondeur de la première partie d'alésage (18), en ce que ledit piston (22) à une forme de cuvette, la partie complètement inférieure dudit piston (22) étant pourvue d'une bague torique (25) venant s'appuyer sur ledit siège de soupape (19), ladite bague torique exposant seulement une partie dudit siège annulaire de soupape (19) à un agent sous pression provenant de ladite seconde partie d'alésage, un organe élastique (30) s'étendant dans ledit piston en forme de cuvette (22) et étant guidé par celui-ci et appuyé dans celui-ci, ledit organe élastique (30) poussant ledit piston (22) pour l'appuyer sur ledit siège de soupape (19), en ce que ledit corps cylindrique (10) comporte une pluralité de passages (37) circonférentiellement espacés et uniformément espacés qui mettent en communication l'extérieur dudit corps cylindrique (10) avec l'intérieur de ladite première partie d'alésage (18), lesdits passages (37) étant placés dans une zone étroitement adjacent audit siège de soupape (19) de telle façon qu'aussitôt que ladite bague torique (25) est soulevée dudit siège annulaire de soupape (19), un échappement se'établit directement par l'intermédiaire desdits passages (37), en ce qu'une rondelle annulaire (32) est placée dans ladite première partie d'alésage (18) pour entrer en contact avec ledit organe élastique (30) de façon à retenir ledit piston (22) dans ladite première partie d'alésage (18), un trou annulaire (33) étant prévu pour la décharge des gaz dans l'atmosphère, et en ce que la section totale desdits passages est inférieure à la section de ladite seconde partie (20) qui communique avec la base dudit piston (22) pour amorcer l'échappement de ladite soupape de décharge.

2. Soupape de décharge à haute pression selon la revendication 1, caractérisée en ce qu'un évidement annulaire (23) est prévu dans la surface inférieure du piston (22), la bague torique (25) étant engagée dans l'évidement (23) pour établir le joint étanche entre le piston (22) et le siège de soupape (19).

3. Soupape de décharge à haute pression selon la revendication 2, caractérisée en ce que l'évidement annulaire (23) a en section droite une forme de queue d'aronde qui est inclinée vers l'intérieur sur le côté radialement extérieur.

4. Radeau de sauvetage comprenant une soupape de décharge selon l'une des revendications précédentes.

## Patentansprüche

1. Hochdruck-Ablaßventil mit einem zylindrischen Gehäuse mit reduziertem zylindrischen Endbereich (12), welcher mit Außengewinde versehen ist, einem zur Befestigung an einem aufblasbaren Floß (14) und zur Verbindung mit dessen innerer Kammer mit dem Endbereich (12) schraubend verbundenen ringförmigen Flansch (13), einer sich durch das Gehäuse (10) erstreckenden abgestuften Bohrung, die einen ersten oberen Bohrungabschnitt (18) und einen zweiten unteren Bohrungsabschnitt (20) aufweist, wobei der zweite Bohrungsabschnitt (20) von kleinerem Durchmesser ist als der erste Bohrungsabschnitt (18) und in dem zylindrischen Endbereich (12) angeordnet ist, einer zwischen dem ersten (18) und dem zweiten Bohrungsabschnitt (20) gebildeten ringförmigen Schulter, die einen ringförmigen Ventilsitz (19) bildet, einem von dem ersten Bohrungsabschnitt (18) gleitend aufgenommenen Kolben (22), dadurch gekennzeichnet, daß die Länge der Außenwand des Kolbens (22) größer ist als die halbe Tiefe des ersten Bohrungsabschnitts (18), daß der Kolben (22) becherförmig ist, daß der unterste Abschnitt des Kolbens (22) mit einem O-Ring zum Angreifen an dem Ventilsitz (19) versehen ist, daß der O-Ring nur einen Teil des ringförmigen Ventilsitzes (19) dem Druckmedium von dem zweiten Bohrungsabschnitt aussetzt, daß sich Federmittel (30) in den becherförmigen Kolben (22) erstrecken und von diesem geführt sind und in ihm einen Sitz erhalten, daß die Federmittel (30) den Kolben (22) in Angriff an dem Ventilsitz (19) vorspannen, daß das zylindrische Gehäuse (10) mehrere mit gleichmäßigen Umfangsabständen angeordnete Durchtrittswege (37) aufweist, die das Äußere des zylindrischen Gehäuses (10) mit dem Innern des ersten Bohrungsabschnitts (18) verbinden, daß die Durchtrittswege (37) dem Ventilsitz (19) dicht benachbart angeordnet sind, so daß das Ablassen direkt durch die Durchtrittswege (37) erfolgt, sobald der O-Ring (25) von dem ringförmigen Ventilsitz (19) abgehoben wird, daß in dem ersten Bohrungsabschnitt (18) eine ringförmige Scheibe (32) zum Angreifen an den Federmitteln (30) zum Zurückhalten des Kolbens (22) in dem ersten Bohrungsabschnitt (18) vorgesehen ist, daß zum Ablassen von Gasen in die Atmosphäre eine ringförmige Bohrung (33) vorgesehen ist und daß die Gesamtfläche der Durchtrittswege kleiner ist als die Fläche des zweiten Abschnitts (20), der mit dem Boden des Kolbens (22) in Verbindung steht, um den Ablaßvorgang des Ablaßventils einzuleiten.

2. Hochdruck-Ablaßventil nach Anspruch 1, dadurch gekennzeichnet, daß in der unteren Fläche des Kolbens (22) eine ringförmige Ausnehmung (23) vorgesehen ist und daß der O-Ring (25) zur Schaffung der Dichtung zwischen dem Kolben (22) und dem Ventilsitz (19) in die Ausnehmung (23) eingreift.

3. Hochdruck-Ablaßventil nach Anspruch 2, dadurch gekennzeichnet, daß die ringförmige Ausnehmung (23) im Querschnitt schwalbenschwanzförmig ist und daß der Schwalbenschwanz zur radialen Außenseite hin nach innen abgewinkelt ist.

4. Rettungsfloß, enthaltend ein Hochdruck-Ablaßventil nach einem der vorhergehenden Ansprüche.

FIG.1

FIG.2